Europäisches Patentamt

(19) European Patent Office

Office européen des brevets

(11) Numéro de publication: **0 027 402**
**A2**

(12) **DEMANDE DE BREVET EUROPEEN**

(21) Numéro de dépôt: **80401380.3**

(22) Date de dépôt: **30.09.80**

(51) Int. Cl.³: **G 01 F 1/36**

(30) Priorité: **12.10.79 FR 7925467**

(43) Date de publication de la demande:
**22.04.81 Bulletin 81/16**

(84) Etats Contractants Désignés:
**DE GB IT NL**

(71) Demandeur: **THOMSON-CSF**
**173, Boulevard Haussmann**
**F-75360 Paris Cedex 08(FR)**

(72) Inventeur: **Coussot, Gérard**
**"THOMSON-CSF" SCPI 173, Bld Haussmann**
**F-75360 Paris Cedex 08(FR)**

(72) Inventeur: **Hartemann, Pierre**
**"THOMSON-CSF" SCPI 173, Bld Haussmann**
**F-75360 Paris Cedex 08(FR)**

(74) Mandataire: **Lepercque, Jean et al,**
**"THOMSON-CSF" - SCPI 173, Bld. Haussmann**
**F-75360 Paris Cedex 08(FR)**

(54) Dispositif de mesure de débit d'un fluide et système senseur du débit d'air dans un moteur à combustion interne mettant en oeuvre un tel dispositif.

(57) L'invention concerne un dispositif de mesure de débit du type comprenant un organe déprimogène (2) créant une pression différentielle entre un circuit amont (16) et un circuit aval d'une canalisation (17).

Selon l'invention, le dispositif de mesure de débit comporte des prises de pression (4, 5) situées de part et d'autre de l'organe déprimogène (2) et constituées par des conduits débouchant en surface du dispositif. Les pressions régnant dans les circuits amont et aval sont communiquées à un capteur de pression différentielle (10) constitué par deux lignes à retard à ondes élastiques de surface reliées à des circuits oscillateurs délivrant des signaux dont la fréquence est proportionnelle à ces pressions. Les signaux sont ensuite transmis à un mélangeur dont la sortie délivre un signal de battement dont la fréquence est égale à la différence des fréquences des signaux délivrés par les oscillateurs. Cette différence de fréquence est directement proportionnelle à la pression différentielle.

Application notamment à la mesure du débit d'air admis dans les cylindres d'un moteur à combustion interne.

FIG.4

1

# DISPOSITIF DE MESURE DE DEBIT D'UN FLUIDE ET SYSTEME SENSEUR DU DEBIT D'AIR DANS UN MOTEUR A COMBUSTION INTERNE METTANT EN OEUVRE UN TEL DISPOSITIF

La présente invention concerne un dispositif de mesure de débit d'un fluide circulant dans des canalisations.

Parmi les diverses méthodes de mesure de débit instantané de fluide, liquide ou gaz, celle dite des "voludéprimomètres" est la plus couramment utilisée. Pour ce faire, on insère dans la canalisation dans laquelle circule le fluide un dispositif de mesure de débit, que l'on appelera dans ce qui suit de façon plus concise débimètre. Ce type de débimètre comporte un organe créant une pression différentielle entre le circuit amont de la canalisation et le circuit aval. Cet organe est le plus souvent un organe déprimogène ,par exemple du type diaphragme ou tuyère, comportant un orifice calibré traversé par le fluide et créant ainsi la pression différentielle. Des prises de pression constituées par des conduits débouchant de part et d'autre de l'organe déprimogène transmettent les pressions régnant dans le circuit amont et dans le circuit aval à un capteur approprié, par exemple du type mécanique ou électromécanique.

Les organes déprimogènes sont des éléments statiques de construction simple donc en général peu coûteux et faciles à modifier. Ils peuvent être utilisés sous des pressions très élevées. Cependant la relation qui lie la pression différentielle au débit est de la forme $Q = k\sqrt{\Delta P}$ ; dans laquelle Q est le débit volumique, k un paramètre dépendant des conditions de mesure et des caractéristiques dimensionnelles de l'organe déprimogène et P la pression différentielle régnant entre le circuit amont et le circuit aval. Il s'en suit que le débimètre doit être muni de moyens destinés à linéariser cette fonction. Si le débimètre est utilisé comme simple appareil de mesure, ces moyens peuvent être réduits à leur plus simple expression en dotant l'appareil de mesure d'une échelle de lecture graduée selon une loi quadratique. La précision en bas de gamme est cependant réduite. Dans le cas où le débimètre est utilisé en tant que dispositif de commande, par exemple incorporé dans une chaine d'asservissement, des dispositifs de linéarisation plus élaborés sont alors prévus. Il peut s'agir d'organes mécaniques : par exemple des cames profilées selon une loi du second degré, ou électriques : par exemple des potentiomètres ou composants analogues, dont la résistance varie selon cette même loi.

Il est en effet souhaitable de pouvoir obtenir un signal de mesure qui soit directement proportionnel au débit. En effet, d'une part, un appareil indicateur de débit peut être gradué régulièrement et, d'autre part, on évite ainsi d'introduire une non linéarité pouvant influencer défavorablement le comportement dynamique d'une boucle de régulation. Enfin ces organes mécaniques ou électromécaniques de conversion comportant des pièces mobiles, sont peu fiables, encombrants et de réponse lente.

Une des applications intéressantes d'un tel débimètre est la mesure de la quantité d'air admis dans les cylindres d'un moteur à combustion interne. La connaissance de ce paramètre est nécessaire pour la réalisation de certains types de systèmes de régulation utilisés pour l'injection de carburant. La tendance actuelle est d'utiliser des systèmes de type numérique, et par exemple utilisant une unité centrale de traitement des données correspondant aux différents paramètres mesurés, constituée par un microprocesseur. Il est donc intéressant d'utiliser des senseurs délivrant des signaux de type numérique. La linéarisation de signaux évoluant selon une loi quadratique en est d'ailleurs facilitée. Cette linéarisation peut s'effectuer soit par un dispositif cablé mettant en oeuvre en général des compteurs d'impulsions, soit par le microprocesseur lui-même à l'aide d'un programme approprié.

Pour répondre à ce besoin, l'invention propose un dispositif de mesure de débit du type précité et utilisant comme capteur de pression au moins deux transducteurs pression-fréquence à ondes élastiques de surface, soumis respectivement à la pression régnant dans le circuit amont et dans le circuit aval. Ces deux oscillateurs délivrent des signaux d'une première et d'une seconde fréquence qui, après mélange, sont traduits en un signal d'une troisième fréquence ou fréquence de battement, représentant la pression différentielle.

L'invention a donc pour objet un dispositif de mesure de débit d'un fluide circulant dans une canalisation du type comprenant un organe créant une pression différentielle entre un circuit amont et un circuit aval, l'organe étant solidaire du corps du dispositif inséré en série dans la canalisation et comportant un canal de communication pour permettre la circulation du fluide ; dispositif principalement caractérisé principalement en ce qu'il comprend, le canal étant muni d'une première et d'une seconde prises de pression constituées par des conduits situés de part et d'autre de l'organe, un senseur de pression comportant un premier et un second oscillateur à ondes élastiques de surface, constitué chacun d'un amplificateur et d'une ligne à retard à transducteurs électromécaniques interdigités déposés sur une plaquette piézoélectrique commune aux deux oscillateurs ; la plaquette étant fixée rigidement au corps du dispositif et les transducteurs des lignes à retard étant déposés sur une des faces de la plaquette dans des première et seconde zones soumises respectivement, sur la face opposée à la face portant les transducteurs, aux pressions régnant dans les conduits des première et seconde prises de pression, de façon à modifier le temps de propagation des ondes élastiques de surface dans la ligne à retard associée et à rendre la fréquence du signal électrique délivré par les premier et second oscillateurs dépendante de cette pression ; le senseur étant en outre pourvu d'un circuit mélangeur recevant ces signaux et délivrant sur sa sortie un signal de battement, de fréquence égale à la différence des première et seconde fréquences.

L'invention a encore pour objet un système senseur du débit de l'air admis dans les cylindres d'un moteur à combustion interne comprenant un tel dispositif.

L'invention sera mieux comprise et d'autres avantages apparaitront à la lecture de la description ci-après en se référant aux dessins annexés parmi lesquels :

- les figures 1 et 2 illustrent le fonctionnement d'un organe déprimogène utilisé dans un débimètre du type dit "voludéprimomètre" ;

- la figure 3 illustre un oscillateur à ondes élastiques de surface ;

- les figures 4 et 5 illustrent un exemple de réalisation d'un dispositif de mesure de débit selon une première approche de l'invention et utilisant comme organe déprimogène un diaphragme ;

- la figure 6 illustre un autre type d'organe déprimogène constitué par une tuyère ;

- la figure 7 et la figure 8 illustrent un exemple de réalisation d'un dispositif de mesure de débit selon une seconde approche de l'invention ;

- la figure 9 est un diagramme montrant la relation existant entre le fréquence du signal délivré par un oscillateur à ondes élastiques de surface mis en oeuvre dans l'invention et la pression différentielle à mesurer ;

- la figure 10 illustre schématiquement un système de régulation de l'injection de carburant dans un moteur à combustion interne associé à un dispositif de l'invention.

Il est tout d'abord utile de rappeler quelques données essentielles à la compréhension des phénomènes mis en jeu lors de l'écoulement de fluides dans des canalisations et à la manière dont on peut en déduire des méthodes pour la mesure des débits de ces fluides. Si on considère un fluide parfait incompressible et que ce fluide s'écoule dans une canalisation horizontale, de section constante S et possédant des parois lisses, la pression P régnant au sein du fluide est aussi constante. Si par contre, la canalisation restant horizontale, sa section est variable, il est connu que la pression P du fluide est plus faible aux endroits où la section S est plus petite, et corrélativement la vitesse v du fluide égale $\frac{Q}{S}$ est plus grande, où Q est le débit volumique du fluide. Les résultats précédents ne sont pas entièrement exacts pour les fluides réels. L'écoulement, entre autre, ne peut être entretenu que par une différence de pression capable de produire un travail dissipé en chaleur par les frottements. Intervient alors dans les équations décrivant l'écoulement de fluide dans les conduits la nature du fluide, et notamment son coefficient de viscosité et sa masse spécifique. Dans les conditions réelles, il se produit donc une différence de pression entre deux points d'une même canalisation dans laquelle s'écoule un fluide, distants d'une longueur. Cette différence de pression est appelée perte de charge et on peut définir un paramètre $\omega = \frac{p-p'}{l}$ représentant la perte de charge linéaire, où p et p' sont les pressions régnant en deux points d'une canalisation distants de la longueur l.

Partant de ces résultats, le dispositif de l'invention peut être réalisé selon deux approches.

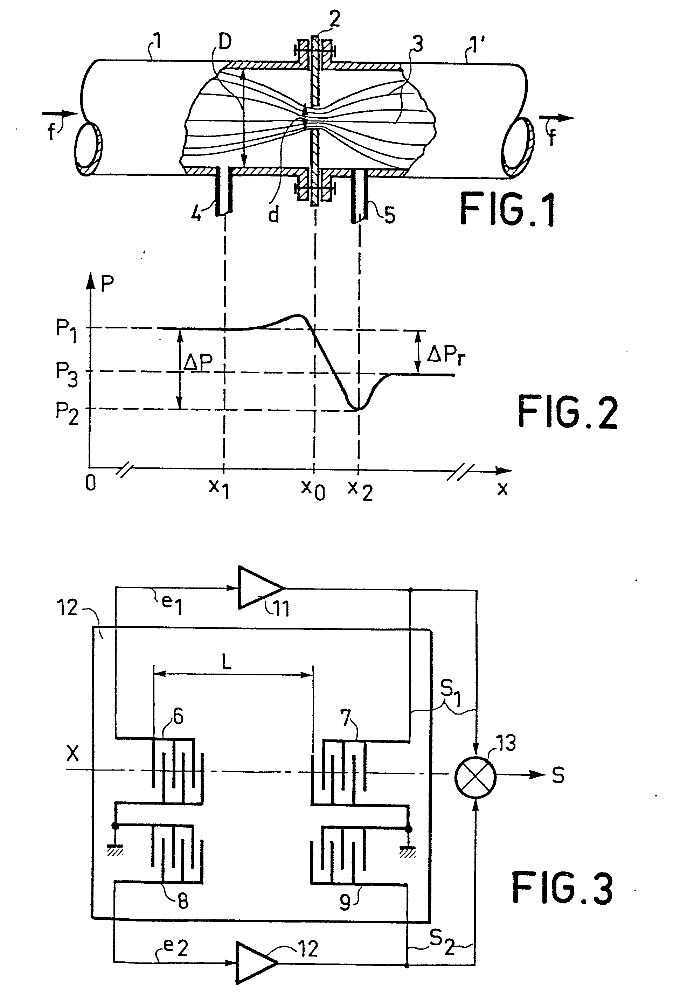

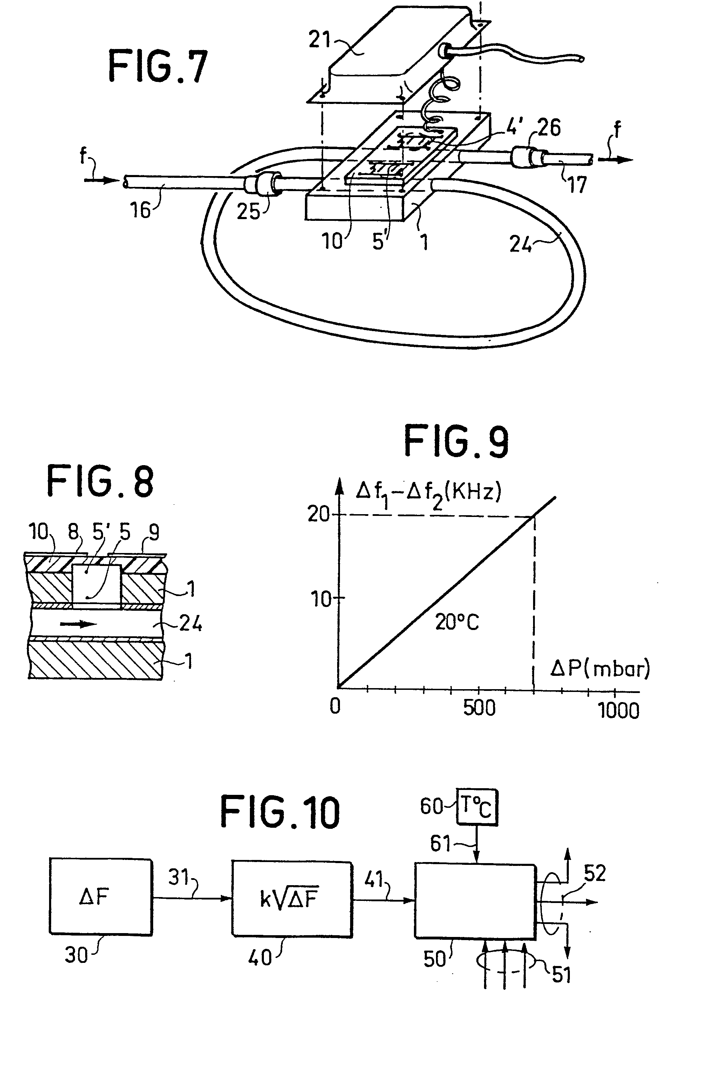

Selon une première approche, illustrée schématiquement par la figure 1, on intercale sur le parcourt du fluide un organe déprimogène 2, constitué dans l'exemple de la figure 1 par un diaphragme percé d'un orifice de diamètre d. Le fluide circulant suivant la direction des flèches f va s'écouler dans la conduite suivant des lignes de courant symbolisées par les lignes portant la référence 3. Dans le circuit amont de la canalisation, supposée de section circulaire et de diamètre intérieur D, le fluide a une pression égale à $P_1$. Aux environs immédiats de l'organe déprimogène 2, la pression du fluide varie selon la courbe représentée sur la figure 2. Dans le circuit aval 1' la pression du fluide est $P_3$. Il se produit une diminution momentanée de la pression qui décroit jusqu'à la valeur $P_2$ à la sortie de l'organe déprimogène 2. On appelle pression différentielle la valeur $\Delta P$, c'est-à-dire la différence de pression $P_1 - P_2$. Une grande partie de la pression différentielle est récupérée en aval de l'organe déprimogène et on appelle la perte de charge résiduelle la valeur $\Delta P_r$, égale à $P_1 - P_3$. Cette valeur dépend de la nature de l'organe déprimogène utilisé : elle est de l'ordre de 40% pour les diaphragmes et de 10% pour les tuyères. Un tel organe déprimogène sera décrit ultérieurement au regard de la figure 6.

Il est connu que l'écoulement d'un fluide dans une canalisation peut s'effectuer suivant deux régimes possibles : un régime dit laminaire ou régime de Poiseuille et un régime dit turbulent ou régime de Venturi. Le régime d'écoulement dépend essentiellement de la vitesse du fluide, de la section de la canalisation et de la nature du fluide. Toutes autres conditions étant maintenues constantes, on passe du régime laminaire au régime turbulent en augmentant la vitesse de circulation du fluide. Les débimètres mettant en oeuvre un organe déprimogène sont utilisés en régime turbulent et dans ces conditions, comme il a été indiqué précédemment, la loi reliant la pression différentielle au débit est donnée par la formule $Q = \sqrt{k \Delta P}$. Le paramètre k est déterminé dans chaque cas par, d'une part, les conditions de mesure : température, pression et nature du fluide et, d'autre part, par les caractéristiques dimensionnelles et la nature de l'organe déprimogène.

Il est en général très difficile d'appréhender les phénomènes d'écoulement des fluides par le seul calcul mathématique. Des normes, et par exemple la norme française NFX10-102, définissent des méthodes de calcul empiriques des dispositifs déprimogènes garantissant une précision de l'ordre de 1 à 3%. Ces normes définissent entre autre le diamètre d du diaphragme ainsi que les endroits précis où doivent être effectuées les mesures des

pressions $P_1$ et $P_3$. Pour ce faire, des prises de pression constituées par les conduits 4 et 5 sont disposées de part et d'autre de l'organe déprimogène 2.

Sur la figure 2 l'abscisse du diaphragme 2 étant $x_0$, les prises de pression sont disposées aux abscisses respectives $x_1$ et $x_2$. Pour un diaphragme simple, la distance $x_1 x_0$ est de l'ordre de la valeur D et la distance $x_0 x_2$ est de l'ordre de $\frac{D}{2}$.

Comme il a été indiqué précédemment, les débimètres mettant en oeuvre des organes déprimogènes (tels que des diaphragmes comme illustré sur la figure 1) sont associés à un capteur de pression permettant de mesurer la pression différentielle P. Les capteurs de l'art connu sont le plus souvent des capteurs analogiques, mécaniques ou électromécaniques. Il est alors difficile de calculer la racine carrée de la valeur obtenue, la loi reliant la pression différentielle au débit étant une loi quadratique. L'invention propose d'utiliser comme capteur de pression un oscillateur à ondes élastiques de surface.

Des capteurs de pression à ondes élastiques de surface sont connus. Il a été tout d'abord proposé des capteurs de pression utilisant un seul oscillateur à ondes élastiques de surface. Plus récemment, pour compenser les effets parasites, il a été proposé un capteur mettant en oeuvre deux oscillateurs dont les fréquences de sortie sont mélangées. La figure 3 illustre un tel capteur. Un premier oscillateur est constitué par une ligne à retard comprenant deux paires d'électrodes en peignes interdigités 6 et 7, déposés sur une plaquette de matériau piézoélectrique et connectés respectivement à l'entrée $e_1$ et à la sortie $S_1$ d'un amplificateur de signaux électriques 11. Deux éléments homologues de ces transducteurs sont séparés par une distance L. Un second oscillateur comprend deux paires d'électrodes en peignes interdigités 8 et 9 reliés respectivement à l'entrée $e_2$ et à la sortie $S_2$ d'un amplificateur 12. Les deux oscillateurs produisent respectivement un signal d'une première fréquence $f_1$ et d'une seconde fréquence $f_2$. Les deux signaux présents sur les sorties $S_1$ et $S_2$ sont mélangés dans un circuit de mélange 13 produisant un signal sur sa sortie S de fréquence $\Delta f$ égale à la différence des fréquences des deux oscillateurs. On appelera cette fréquence $\Delta f$ fréquence de battement. Un dispositif de ce type est décrit, par exemple, dans le brevet US n° 4 100 811.

7

La ligne à retard comprenant les transducteurs 6 et 7 est disposée sur la partie centrale de la plaquette piézoélectrique 10 soumise à une pression à mesurer sur la face opposée au dépôt d'électrodes. L'axe de cette ligne à retard est figuré par la ligne interrompue X. En périphérie est disposée la seconde ligne à retard comprenant les transducteurs 8 et 9. Cette disposition permet de compenser en grande partie notamment l'effet des dérives en température, ces dérives en température se traduisant des variations en fréquence de même signe dans les deux oscillateurs.

L'invention va mettre à profit l'existence d'une deuxième voie sur les capteurs mettant en oeuvre des oscillateurs à ondes élastiques de surface. Les deux voies peuvent être symétriques par rapport à la plaquette piézoélectrique sans inconvénient. On soumet l'une des voies à la pression régnant dans le circuit amont à l'aide de la prise de pression 4 et la seconde voie à la pression régnant dans le circuit aval à l'aide de la prise de pression 5. Les signaux de sortie des oscillateurs associés, de fréquences respectives $f_1$ et $f_2$ sont mélangés et la fréquence de battement $\Delta f$ est directement proportionnelle à la pression différentielle $\Delta P$.

Dans le cas de la mesure de débit de gaz et par exemple de débit d'air, il est nécessaire d'utiliser des canalisations de diamètre intérieur relativement important, par exemple de l'ordre de 40 mm. Aussi l'utilisation d'un diaphragme simple tel qu'illustré sur la figure 1 conduirait, d'après ce qui a été indiqué, à une distance entre les deux prises de pression 4 et 5 de l'ordre de 60 millimètres. Il est plus judicieux pour cette application d'utiliser un diaphragme dit à chambre annulaire, type de diaphragme permettant de diminuer cette distance. Pour ce faire on creuse dans la paroi de la conduite, de part et d'autre du diaphragme, deux cavités circulaires ouverts d'une part sur, respectivement, le circuit amont et le circuit aval, et d'autre part, par l'intermédiaire des conduits 4 et 5, vers l'extérieur de la conduite.

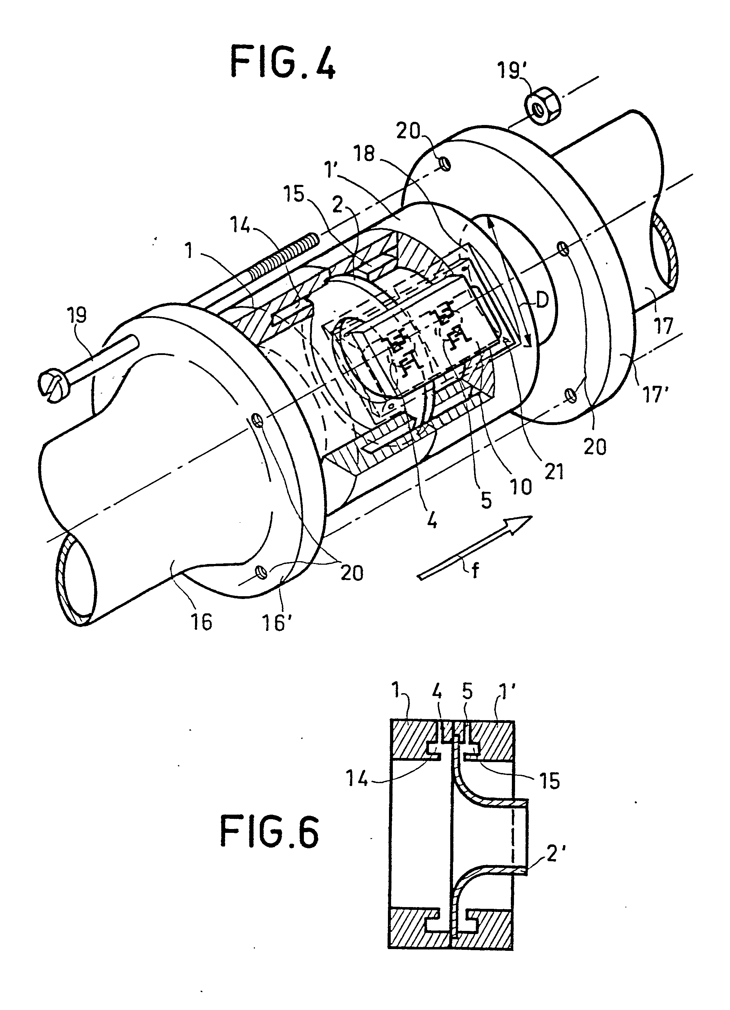

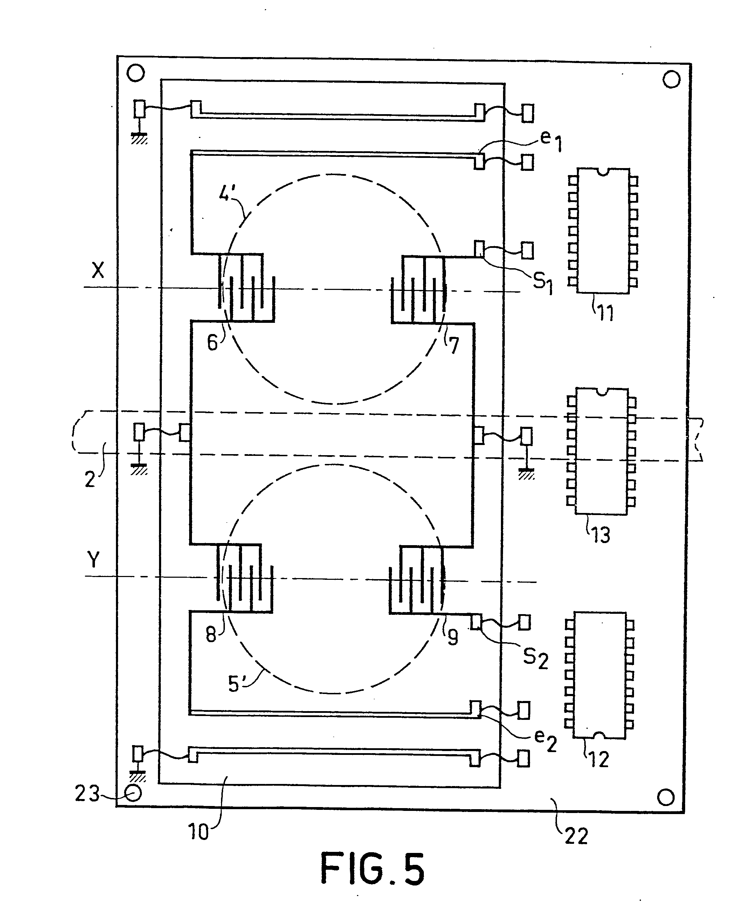

Un dispositif de mesure de débit ou débimètre, réalisé selon la première approche de l'invention et mettant en oeuvre un organe déprimogène du type diaphragme à chambre annulaire, est illustré par la figure 4. Le débimètre ainsi constitué est inséré dans la conduite où circule le fluide dont on désire mesurer le débit. Le sens de circulation est symbolisé par la flèche f. Le corps du débimètre comporte deux parties 1 enserrant l'organe déprimogène 2 constitué par un diaphragme d'ouverture calibrée. Le corps du débimètre est muni d'un canal de communication d'un diamètre intérieur D de préférence égal à celui de la canalisation dans lequel circule le fluide. Ce débimètre est maintenu par serrage entre le circuit amont 16 et le circuit aval 17. Pour ce faire ces circuits sont, par exemple, munis de brides 16' et 17' maintenues à l'aide de moyens de fixation 19, 19' et 20. De part et d'autre du diaphragme 2, sont aménagés des canaux circulaires 14 et 15 communiquant, d'une part, avec le fluide et, d'autre part, par les conduits 4 et 5 avec un capteur de pression selon l'invention et qui va être décrit en relation avec la figure 5. Des coupes partielles ont été effectuées dans le corps du débimètre pour mettre en évidence les parties cachées de ce dispositif. En outre, un méplat 18 a été aménagé sur une partie de la surface extérieure du corps du débimètre permettant la fixation de la plaquette 10 élément essentiel du capteur selon l'invention. Un capot de protection 21 peut être prévue et fixé sur ce méplat. Il permet notamment de protéger la plaquette piézoélectrique sur laquelle a été déposée les transducteurs contre les agressions d'agents extérieures.

La figure 5 illustre un capteur de pression différentielle selon l'invention comprenant deux oscillateurs à ondes élastiques de surface. Chacun des oscillateurs est sensiblement analogue à une des voies illustrées sur la figure 3. Les transducteurs sont déposés sur une plaquette piézoélectrique 10 formant substrat et constituent deux lignes à retard disposées selon deux axes parallèles X et Y. Les zones de la plaquette entre, d'une part, les transducteurs 6 et 7 et, d'autre part, les transducteurs 8 et 9 sont soumises respectivement, sur la face opposée au dépôt de ces transducteurs, aux pressions régnant en amont et en aval de l'organe déprimogène 2. Pour ce faire la plaquette peut comporter des évidements 4' et 5' de même diamètre de préférence que les orifices de sortie des prises de pression 4 et 5, de façon à réduire l'épaisseur de la plaquette dans ces zones. La plaquette elle-même peut être fixée sur un circuit imprimé 22 muni de fenêtres au moins égales en superficie aux évidements 4' et 5'. Ce circuit imprimé va être fixé sur le méplat 18 à l'aide de moyens de fixation symbolisés par les orifices 23 et sert de support à des modules électroniques, constitués par exemple des circuits intégrés 11, 12 et 13 homologues aux circuits de la figure 3. Sur ce circuit imprimé sont également aménagés des liaisons électriques (non représentées) interconnectant, d'une part, les circuits portés par la plaquette piézoélectrique 10 et, d'autre part, les circuits électroniques destinés à l'amplification et au mélange. La plaquette piézoélectrique peut être réalisée par exemple dans du quartz en coupe ST. A titre d'exemple, une valeur typique pour la fréquence d'oscillation de chacun des oscillateurs est de l'ordre de 100 MHz. Il peut être préférable que, au repos, c'est-à-dire lorsque les pressions exercées sur chacune des zones 4' et 5' sont égales ($\Delta$P = 0), la fréquence de battement délivrée par le mélangeur 13 soit différente de zéro et par exemple de l'ordre de 100 KHz.

Contrairement aux capteurs de pression de l'art ancien connu réalisés selon le schéma de la figure 3, chacune des voies est une voie active car soumise à une pression différente à mesurer. En effet sur la figure 3, la ligne à retard comprenant les transducteurs 8 et 9 ne sert que pour la compensation d'effets parasites. Dans le cadre de l'invention, il est inutile de prévoir pour chacune des voies, un double oscillateur. En effet, si les deux oscillateurs comprenant d'une part, les transducteurs 6 et 7 et, d'autre part, les transducteurs 8 et 9 sont réalisés par dépôt sur la même plaquette, les compensations s'effectuent de la même manière.

D'autres types d'organes déprimogènes peuvent être utilisés et, par exemple non limitatif, des tuyères, des venturi ou toute combinaison de ces organes. Dans le cadre de l'invention, comme il a été déjà signalé, il est préférable de déposer les transducteurs constituant les lignes à retard sur la même plaquette du matériau piézoélectrique. Il est donc intéressant de sélectionner parmi ces organes ceux permettant des prises de pression rapprochées. Outre le diaphragme à chambre annulaire mis en oeuvre dans l'exemple qui vient d'être décrit en relation avec les figures 4 et 5, on peut utiliser un type de tuyère également à chambre annulaire illustrée sur la figure 6.

Sur cette figure 6 la tuyère 2' remplace le diaphragme 2 de la figure 4. La tuyère se compose d'une partie convergente à profil arrondi prolongée par un col cylindrique, montée entre les brides 1 et 1' identiques à celles utilisées pour les diaphragmes à chambre annulaire.

Le choix du type précis d'organe déprimogène dépend de nombreuses considérations et notamment de considérations liées au coût et à la facilité de réalisation d'une part, et d'autre part à la perte de charge résiduelle maximale autorisée, les organes déprimogènes du type tuyère ou venturi provoquant, comme il a été déjà signalé, une perte plus faible.

Selon une seconde approche, on met à profit la perte de charge existant dans toute canalisation et donnée par la relation $\omega = \frac{P - P'}{l}$ où l est la distance parcourue par un fluide. La figure 7 illustre un exemple de réalisation selon cette approche. Comme précédemment, un fluide circule dans la direction indiquée par les flèches f, du circuit amont 16 vers le circuit aval 17. Un débimètre réalisé selon la seconde approche de l'invention est intercalé entre ces deux circuits. Le débimètre comprend un corps 1 percé de deux canaux dans lesquels une canalisation supplémentaire 24 enroulée sur elle-même est maintenue au voisinage de ses extrémités et connectée respectivement en 25 et 26 au circuit amont 16 et 17. Egalement au voisinage des extrémités de cette canalisation et dans le corps du débimètre sont percés des conduits 4 et 5 constituant des prises pour mesurer la pression régnant au voisinage de ces extrémités. Sur la face supérieure du corps du débimètre est positionnée une plaquette piézoélectrique sur laquelle ont été déposées deux lignes à retard identiques à celles illustrées par la figure 5. Dans la zone utile des lignes à retard sont pratiqués des évidements 4' et 5' de même diamètre que les orifices de sortie des conduits 4 et 5 et positionnés par rapport à ces orifices de sortie. La figure 8 illustre en coupe une telle disposition.

La fréquence des signaux de sortie des oscillateurs associés, respectivement aux lignes à retard comprenant les transducteurs 6 et 7 et 8 et 9 qui délivrent des signaux de fréquences $f_1$ et $f_2$ proportionnelles directement au pression régnant aux deux extrémités de la canalisation supplémentaire 24. Si la longueur de cette canalisation est connue et égale à l ainsi que la nature du fluide dont on désire mesurer le débit volumique, Ce débit peut être déduit à partir de la différence f des deux fréquences $f_1$ et $f_2$.

Un exemple d'application particulièrement intéressant des dispositifs selon l'invention va maintenant être décrit en relation avec la figure 10. Selon un procédé connu de régulation de l'injection de carburant dans un moteur à combustion interne, le débit d'air admis dans les cylindres de ce moteur doit être mesuré et l'indication transmise à un dispositif de traitement de données combinant des signaux représentant, outre le débit d'air, des paramètres caractéristiques du fonctionnement du moteur. Sur la figure 10, un circuit 30 constitué par un dispositif selon l'invention délivre des signaux de fréquence F, c'est-à-dire des signaux de types numériques sur sa sortie 31. A ce stade pour connaitre le débit volumique Q on peut utiliser un dispositif cablé pour établir un signal dont la fréquence est proportionnelle à la racine carrée de la fréquence de sortie du mélangeur 13, ce pour effectuer le calcul de la relation $Q = k\sqrt{\Delta F}$, c'est-à-dire d'une valeur proportionnelle à $\sqrt{\Delta P}$, puisque la fréquence est directement proportionnelle à la pression différentielle P. A titre d'exemple ce circuit peut mettre en oeuvre des compteurs d'impulsions et être du type dit "B.R.M." dans la terminologie anglo-saxonne. La sortie 41 de ce circuit, représentant le débit volumique d'air admis dans les cylindres est transmis à un circuit de traitement de données 50 recevant des signaux représentant d'autres paramètres caractéristiques sous la référence générale 51 et plus particulièrement la température T°C fournie par un capteur de température approprié 60 et transmis par la liaison électrique 61. De ces différents paramètres, le circuit de traitement de données 50 élabore les signaux 52 analogiques ou numériques nécessaires à la régulation de l'injection de carburant dans les cylindres du moteur à combustion interne. La tendance actuelle est d'utiliser comme circuit de traitement de données un microprocesseur. Ce même microprocesseur peut effectuer directement par programme le calcul $\sqrt{\Delta F}$. Dans ce cas le circuit 40 est omis. Le microprocesseur peut également effectuer toutes corrections nécessaires au bon fonctionnement, pour tenir compte par exemple de la température ou de l'altitude. Le débit massique peut également être calculé à partir du débit volumique (Q) et de la température (T°C).

La figure 9 est un diagramme représentant la différence des variations $(\Delta f_1 - \Delta f_2)$ des fréquences des signaux délivrés par les oscillateurs en KHz, ce en fonction de la pression différentielle P à mesurer, en mbar. L'expérience montre que la variation de fréquence est directement proportionnelle à la variation de la pression différentielle. La courbe de la figure 9 est donnée pour une valeur de la température égale à 20°C. La pente de la droite est de

12

18 Khz par bar. On peut détecter des variations d'environ 6 Hz correspondant à 0.2 mbar. Le temps de réponse d'un tel dispositif est particulièrement rapide et dans tous les cas inférieur à 1 ms. Pour un moteur de cylindrée moyenne, le débit à mesurer varie dans la gamme de l'ordre de 25 l/s à 100 l/s lorsqu'on passe du régime de fonctionnement au ralenti du moteur au régime maximum. La pression atmosphérique normale correspondant à 1013,25 mbar par convention, la pression $P_1$ dans le circuit amont est de l'ordre de grandeur de cette pression aux pertes de charge près. Ces considérations permettent d'effectuer le choix de l'organe déprimogène.

13

REVENDICATIONS

1. Dispositif de mesure de débit d'un fluide circulant dans une canalisation (16, 17) du type comprenant un organe (2) créant une pression différentielle entre un circuit amont (1) et un circuit aval (1'), l'organe étant solidaire du corps du dispositif inséré en série dans la canalisation et comportant un canal de communication pour permettre la circulation du fluide ; dispositif caractérisé en ce qu'il comprend, le canal étant muni de première (4) et seconde (5) prises de pression, constituées par des conduits situés de part et d'autre de l'organe, un senseur de pression comportant un premier et un second oscillateur à ondes élastiques de surface, constitué chacun d'un amplificateur (11,12) et d'une ligne à retard (6-7, 8-9) à transducteurs électromécaniques interdigités déposés sur une plaquette piézoélectrique (10) commune aux deux oscillateurs ; la plaquette étant fixée rigidement au corps du dispositif et les transducteurs électromécaniques étant déposés sur une des faces de la plaquette dans des première (4') et seconde zones (5') soumises respectivement, sur la face opposée à la face portant les transducteurs aux pressions régnant dans les conduits des première et seconde prises de pression, de façon à modifier le temps de propagation des ondes élastiques de surface dans la ligne à retard associée et à rendre la fréquence des signaux électriques délivrés par les premier et second oscillateurs dépendante de cette pression ; le senseur étant en outre pourvu d'un circuit mélangeur (13) recevant ces signaux et délivrant sur sa sortie un signal de battement, de fréquence égale à la différence des première et seconde fréquences.

2. Dispositif selon la revendication 1, caractérisé en ce que la canalisation ayant une section droite interne circulaire, le corps du dispositif est muni d'un canal de même section circulaire, les orifices d'entrée et de sortie de ce canal étant centrés par rapport, respectivement, aux circuits amont (16) et aval (17) de cette canalisation.

3. Dispositif selon la revendication 2, caractérisé en ce que le corps du dispositif est constitué par deux pièces annulaires (1, 1') de diamètre interne égale à celui de la canalisation et en ce que l'organe créant une différence de pression entre le circuit amont et aval est un organe déprimogène (2) maintenu rigidement par les deux pièces annulaires (1, 1').

4. Dispositif selon la revendication 3, caractérisé en ce que l'organe déprimogène est un diaphragme (2).

5. Dispositif selon la revendication 3, caractérisé en ce que l'organe déprimogène est une tuyère (2') comprenant une partie convergente, à profil arrondi prolongée par un col cylindrique dans la direction du circuit aval.

6. Dispositif selon l'une quelconque des revendications 3 à 5, caractérisé en ce qu'en outre chaque pièce annulaire (1, 1') comporte une cavité périphérique (14, 15) une chambre également annulaire communiquant, d'une part, avec le fluide et, d'autre part par l'intermédiaire d'un conduit de prise de pression (4,5), avec la surface externe de la pièce annulaire (1, 1').

7. Dispositif selon l'une quelconque des revendications 3 à 6, caractérisé en ce qu'un méplat (18) est aménagé sur la surface extérieure du corps, destiné à recevoir la plaquette piézoélectrique (10) ; l'orifice de sortie des conduits des prises de pression (4, 5) affleurant la surface du méplat.

8. Dispositif selon la revendication 1, caractérisé en ce que l'organe créant une pression différentielle entre le circuit amont (16) et le circuit aval (17) de la canalisation est consituté par une canalisation auxiliaire (24), de longueur déterminée (l) enroulée sur elle-même pour former au moins une spire et en ce que les deux extrémités amenées en position jointive sont percées chacune d'un orifice (5, 5') mis en communication avec une des zones portant les transducteurs de la plaquette piézoélectrique (10), la différence de pression étant créée par la perte de charge due à la circulation du fluide dans la canalisation sur la longueur déterminée (l).

9. Système senseur du débit de l'air admis dans les cylindres d'un moteur à combustion interne caractérisé en ce qu'il comprend un dispositif selon l'une quelconque des revendications 1 à 8, associé à un dispositif de traitement de données (40, 50) calculant le débit volumique à partir de la relation $Q = k\sqrt{\Delta P}$, dans laquelle k est un paramètre lié au dispositif de mesure et à la nature du fluide à mesurer et $\Delta P$ la pression différentielle directement proportionnelle à la fréquence des signaux électriques délivrés par le circuit mélangeur (13).

FIG.1

FIG.2

FIG.3

FIG.4

FIG.6

0027402

FIG. 5

4/4

**FIG.7**

**FIG.8**

**FIG.9**

$$\Delta f_1 - \Delta f_2 \,(KHz)$$

20°C

$$\Delta P \,(mbar)$$

**FIG.10**

60 — T°C

$$\Delta F \quad | \quad k\sqrt{\Delta F}$$

30      40      50